# EUROPEAN PATENT APPLICATION

(11) **EP 3 305 246 A1**
(43) Date of publication of application: **11.04.2018**
(21) Application number: 15893927.2
(22) Date of filing: 26.10.2015
(51) Int. Cl.: A61C 17/26

(54) **BRUSH HEAD APPARATUS OF MULTIFUNCTIONAL ORAL CARE TOOL**

(30) Priority: 04.06.2015 CN 201510306861
(71) Applicant: Meng, Yong, Bengbu, Anhui 233700 (CN)
(72) Inventor: MENG, Yong, Guzhen County Bengbu, Anhui 233700 (CN); WANG, Yu, Haidian District Beijing 100082 (CN)
(74) Representative: Lang, Christian
(86) International application number: PCT/CN2015/092841
(87) International publication number: WO 2016/192279

(57) **Abstract**

A brush head device of a multifunctional oral care tool comprises a pair of transmission rods (5) respectively connected with a pair of brush heads (1). The pair of brush heads (1) is integrally formed by using a food-grade silica gel type of soft material respectively. The pair of brush heads (1) performs 360-degree rotation in opposite directions. A back-flushing plate (4) is provided at a back of the pair of brush heads (1). End portions of the transmission rods (5) are lower than an end portion of the brush heads (1). A top end of the back-flushing plate (4) is lower than top ends of the brush heads (1).

## Description

### BACKGROUND OF THE INVENTION

### TECHNICAL FIELD

The present invention relates to a brush head device of a multifunctional oral care tool and, more particularly, to a brush head device of a multifunctional oral care tool providing three-in-one effects of suction, flushing, and brushing.

### BACKGROUND TECHNIQUE

Current techniques for proceeding with oral cleaning, most of them are medical machines, generally use a washer/disinfector to proceed with cleaning for the patient. The structure of the washer/disinfector includes a plunger on a container. Water is ejected into the oral cavity of the patient through reciprocating movement of the plunger. To achieve the disinfection purposes, a suitable amount of disinfectant is generally added into clear water. Shortcomings of this arrangement include: 1. The pressure of the ejected water flow cannot be easily guaranteed. Gum eversion or gingival laceration will occur if the pressure is too large. If the pressure is too small, the impurities in the oral cavity will be left in the tooth gaps, leading to a poor cleaning effect. 2. The operation is inconvenient. 3. Occupation of a large area, leading to inconvenience in carriage, disposition, and disinfection. China Invention Patent Application No. CN 201210381558 as entitled "A FUR CLEANING DEVICE" discloses a technical solution including a box. Due to inclusion of the above components, although this device can clean furs, the bristles can injure lingual papillae and taste buds. Furthermore, this device has a large volume which is not easy to carry.

### DISCLOSURE OF THE INVENTION

### TECHNICAL PROBLEMS

Conventional toothbrushes use nylon filament bristles. Due to technical problem in production of nylon filament bristles, a bundle of tens of filaments is implanted into a hole of a brush head handle. The roots of the bristles are difficult to clean and dry and are apt to contain oral waste and breed bacteria. Furthermore, the sugar in the toothpaste is most suitable for propagation and growth of bacteria. During every tooth brushing, bacteria and viruses are brought back into the oral cavity, and the procedure repeats. Use of a conventional tooth brush is a linear rubbing cleaning with bristle tips. Namely, the tips of the bristles are used to rub the tooth face, which is a "linear rubbing" requiring many times of repeated back and forth brushing to touch the whole tooth face. If not taken carefully, there will be neglected areas, leading to incomplete cleaning of teeth. Furthermore, in every rubbing, the nylon filament bristles will scratch the gums and the teeth. The coarser the bristles, the greater the injury. The harder, the greater the injury. Gum breeding, gum shrinkage, deeper gingival sulcus, periodontal disease, and gomphiasis are apt to occur. Since conventional toothbrushes not only fail to thoroughly clean the teeth but cause irreparable injury to the gums and the teeth, dentists keep advising to brush in a direction from the gum towards the crown of the tooth and do not use force to reduce injury to the gum. However, in daily life, people are used to brush horizontally or vertically. Horizontal brushing will cause contusion, sprain, or gingival laceration of the gums, and vertical brushing will cause gum eversion and gingival laceration. Thus, bacteria and viruses in the oral cavity directly invade the blood through the wound in the gums, hazarding the body health.

Gum massage can improve blood circulation in the gum and the roots of teeth, increase the toughness and elasticity of the gum, strengthen the teeth, and prevent gum breeding, gum shrinkage, periodontal disease, and gomphiasis, which help periodontal health and recovery as well as recovery of sensitive dentin. In daily life, people using conventional toothbrushes are difficult to enjoy proper gum massage. Since the proper way to massage the gums is in the direction from the gum to the crown of the tooth, the health-care massage cannot be attained otherwise, while causing contusion, sprain, eversion, and gingival laceration of the gums.

In respect of cleaning and health of the oral cavity, issues related to the cleaning of tongue have drawn people's attention and have become as important as the cleaning of teeth. In the night time, due to the decrease of salivary secretion and swallow, the furs are similar to a culture medium which provides the best condition for propagation, decomposition and putrid fermentation of the bacteria, viruses, food debris, dead epitheliums. The furs are dirtier than the sputum after a whole night of fermentation. Many tools for brushing the furs have become available in the market, and new type toothbrushes have a tongue brush on a back side of the brush head. But this is primarily provided for shaving the furs. Such an approach of shaving the furs or brushing of the furs has been strongly opposed by the dentists, as it hurts the taste buds and the lingual papillae and causes amblygeustia. Like sweeping a carpet with a broom, which not only damages the carpet but only the surface can be cleaned while the dust inside the carpet cannot be removed. Similarly, scratching the furs and brushing the furs are not able to clean the oral waste at the roots of the furs, the taste buds and the lingual papillae, such as bacteria and food debris.

### SOLUTION TO PROBLEMS

### TECHNICAL SOLUTION

An objective of the present invention is to overcome the problems of deficiencies and single function of the existing techniques and, thus, designs a multifunctional brush head device which includes a pair of brush heads that is driven by a pair of transmission rods to perform 360-degree rotation in opposite directions to proceed with cleaning and care of the whole oral cavity, including cleaning of teeth, cleaning of furs, gum massage, tongue massage, and lip care. The brush heads according to the present invention are integrally formed of a food-grade silica gel type of soft material, which can snugly abut the uneven tooth faces to provide a more powerful cleaning force. Thus, rapid thorough cleaning can be attained without injuring the gums, taste buds, lingual papillae, and oral mucosa, which is clean and safe.

Through 360-degree rotation in opposite directions, the pair of brush heads can attain proper tooth cleaning, proper gum massage and ideal tongue cleaning advised by dentists. The furs can be deeply cleaned to thoroughly remove oral waste at the tooth gaps, gingival sulcus, occlusal surfaces, and the inner sides of the wisdom teeth. No dead end cleaning can be processed in the whole oral cavity. The use is simple and convenient, and carriage is easy. Furthermore, the brush heads are made by integral formation without gaps and can be cleaned after use. Through 360-degree rotation in opposite directions, self-cleaning can be attained, and the brush heads are easy to dry without the risk of hiding and breeding of bacteria, which is more sanitary.

The objective of the present invention is fulfilled by the following technical solution. A brush head of a multifunctional oral care tool is designed and produced, particularly a pair of transmission rods respective connected with a pair of brush heads. The pair of brush heads performs 360-degree rotation in opposite directions. A back-flushing plate is provided at a back of the pair of brush heads.

Wherein, the brush heads are made of a food-grade silica gel type of soft material.

Wherein, the brush heads are integrally formed.

Wherein, end portions of the transmission rods are lower than end portions of the brush heads.

Wherein, a top end of the back-flushing plate is lower than top ends of the brush heads.

### ADVANTAGEOUS EFFECT OF THE INVENTION

### ADVANTAGEOUS EFFECT

Advantageous effects of the present invention are that: a pair of transmission rods drive a pair of brush heads connected therewith, with the pair of brush heads performing 360-degree rotation in opposite directions, which not only proceeds with rapid cleaning of the tooth gaps, gingival sulcus, and occlusal surfaces but has a small volume to deeply enter the inner sides of wisdom teeth to attain no dead end cleaning of the whole oral cavity. The brush heads are made by using a food-grade silica gel type of soft material to attain cleaning of soft tissues of furs, gums, lips, etc. without causing any injury while proceeding with health-care massage at the gum, tongue, and lips.

In comparison with current techniques, by using the above technical solution, the present invention fulfills a brush with multiple functions, it has a simple structure, is easy to use, carry, clean, and dry and is less likely to hide and breed bacteria, which is more sanitary. It can clean the teeth, clean the furs, and massage the gums and the tongue as well caring the lips, providing all-around cleaning and health for the whole oral cavity without injuring the gum, taste buds, and lingual papillae.

### BRIEF DESCRIPTION OF THE ACCOMPANYING DRAWINGS

### DESCRIPTION OF THE ACCOMPANYING DRAWINGS

FIG. 1 is a rear structural diagrammatic view of a brush head device of an embodiment according to the present invention.
FIG. 2 is a side structural diagrammatic view of the brush head device of an embodiment according to the present invention.
FIG. 3 is a top structural diagrammatic view of the brush head device of an embodiment according to the present invention.
FIG. 4 is a front structural diagrammatic view of the brush head device of an embodiment according to the present invention.

### BEST EMBODIMENT FOR CARRYING OUT THE INVENTION

### BEST IMPLEMENTATION OF THE INVENTION

The present invention is further illustrated in details hereinafter in connection with concrete embodiments. However, it should not be taken to limit the scope of the above subject of the present invention to the following embodiments. All techniques carried out based on the contents of the present invention shall be within the scope of protection of the present invention.

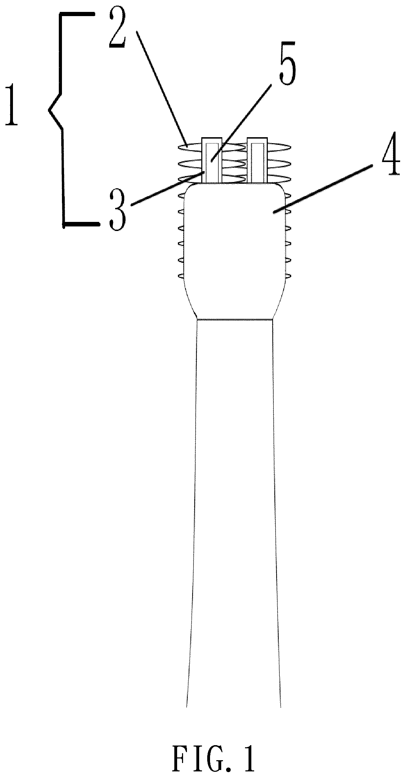

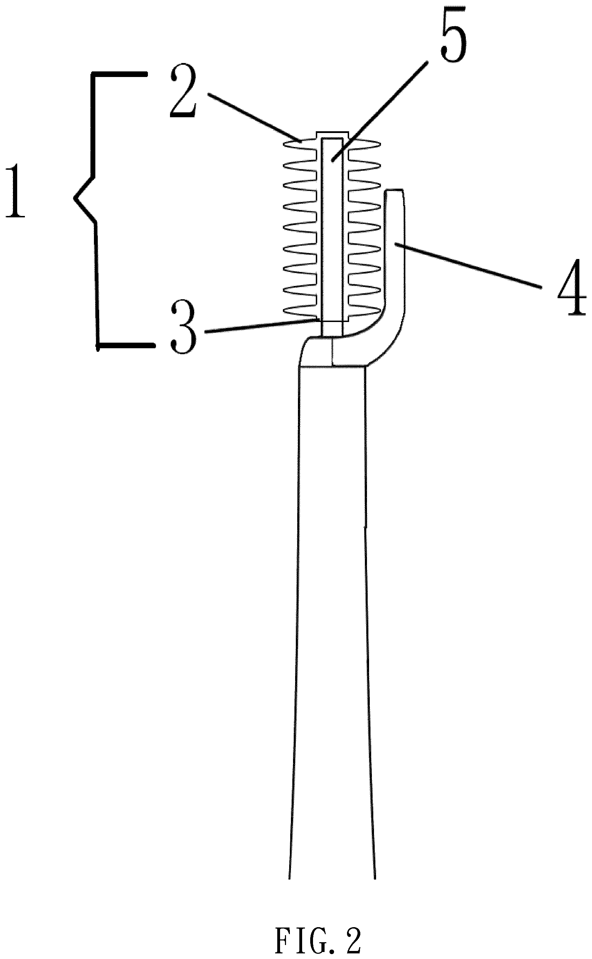

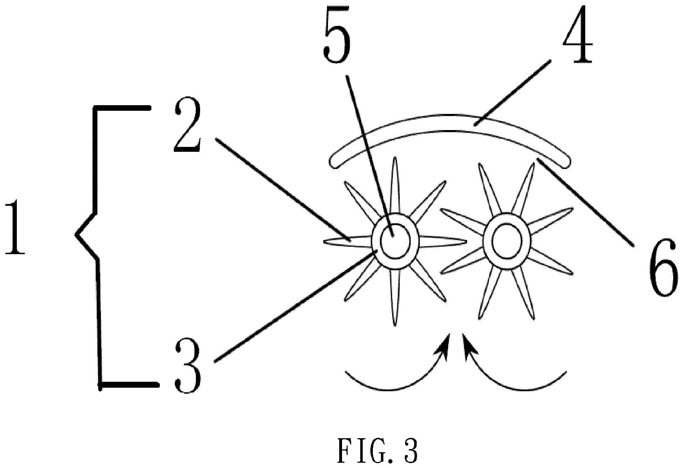

As shown in FIG. 2, a pair of transmission rods 5 respectively extends into rollers 3 of a brush head 1. The brush head 1 includes bristles 2 and the rollers 3, which are made of a food-grade silica gel type of soft material through integral formation by one-piece molding. Namely, the bristles 2 and the rollers 3 are an integral structure without gaps. The pair of brush heads 1 is driven by the transmission rods 5 to perform 360-degree rotation in opposite directions (see FIG. 3). End portions of the transmission rods 5 are lower than end portions of the brush heads 1. A back-flushing plate 4 is provided at a back of the pair of brush heads 1. A top end of the back-flushing plate 4 is lower than top ends of the pair of brush heads 1 (see FIG. 1). The back-flushing plate 4 has a back-flushing function. During the tooth brushing procedure, the bristles are actuated under rotation of the rollers. The washing water flow impacts the back-flushing plate 4, and the water flow is reflected backwards by the back-flushing plate 4 to further flush the oral waste on the bristles and the rollers, such that the teeth can be brushed more clean. Thus, use of the brush head device according to the present invention can attain "three-in-one" effects of suction, flushing, and brushing, achieving a more effective and better cleaning effect.

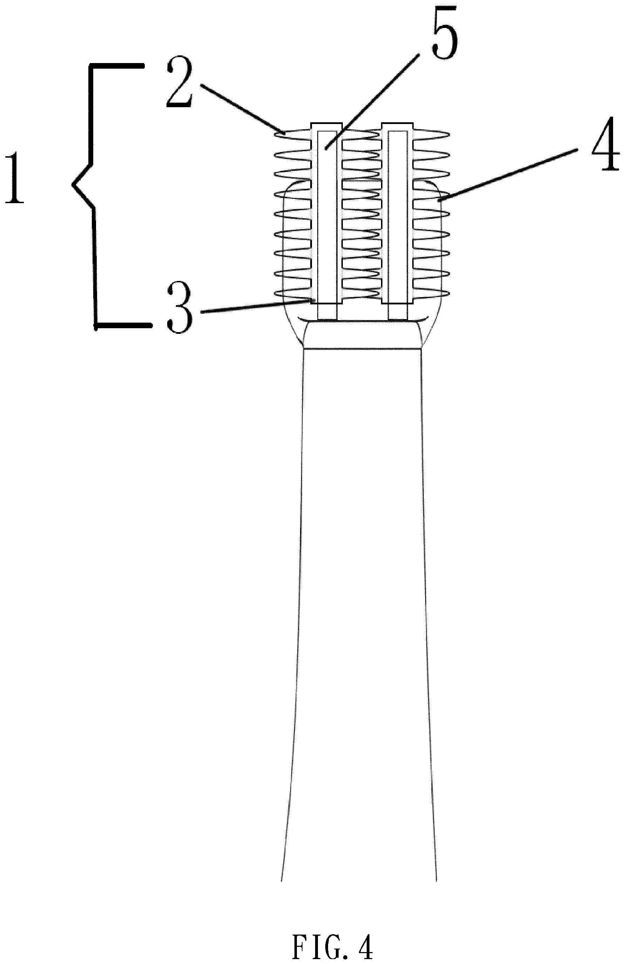

As shown in FIG. 4, a preferred embodiment structure of the present invention is as follows:

A pair of transmission rods 5 is respectively connected with a pair of brush heads 1. The brush heads are driven by the transmission rods to perform 360-degree rotation in opposite directions, attaining oral cleaning and care of teeth, furs, and gums, etc.

First Concrete Embodiment: Example of Cleaning of Teeth and Furs.

Since the brush heads 1 according to the present invention are made of a food-grade silica gel type of soft material and perform 360-degree rotation in opposite directions (see FIG. 3), deep cleaning of locations at the teeth, the tooth gaps, gingival sulcus, occlusal surfaces, and the fur roots can be attained without injuring the gums and the soft tissues in the oral cavity. During cleaning of the teeth, when the front ends of the bristles 2 are placed in a tooth gap, each bristle 2 adjacent to a side of the tooth gap acts like a respective toothpick and rotates in a direction from the gum towards the tooth crown, rapidly cleaning the tooth gap while other bristles are cleaning the tooth face. The bristles 2 of the brush head at the other side also rotate in the direction from the gum towards the tooth crown to clean the tooth at the other side or occlusal surface without causing gum eversion or gingival laceration. Since the material of the brush heads 1 is a food-grade silica gel type of soft material, the gums will not be scratched. Furthermore, the brush heads are integrally formed to permit easy cleaning after use while avoiding hiding and breeding of bacteria between the bristles 2 and the rollers 3, thereby avoiding mutual secondary infection between the tool and the bacteria or viruses in the oral cavity.

As shown in FIG. 2, a pair of brush heads 1 made of a food-grade silica gel type of soft material is driven by a pair of transmission rods 5 to perform 360-degree rotation in opposite directions. The front ends of the bristles 2 suck toothpaste foam or mouthwash during rotation, forming a powerful sucking flow to suck oral waste away. The rear ends of the bristles 2 splash the sucked toothpaste foam or mouthwash onto the back-flushing plate, forming a powerful flush flow to flush oral waste away. Under continuous rotation of the bristles 2 and the sucking and flushing of the powerful water flows thus formed, "suction, flushing, and brushing" "three-in-one" thorough cleaning of the teeth is attained.

During cleaning of furs, a pair of brush heads 1 made of a food-grade silica gel type of soft material is driven by a pair of transmission rods 5 to perform 360-degree rotation in opposite directions. While the bristles 2 is proceeding with "rolling brushing", the furs, taste buds, and lingual papillae can be "hold up" to expose the gaps between the fur roots. The front ends of the bristles 2 suck toothpaste foam or mouthwash during rotation, forming a powerful sucking flow to suck away oral waste in the furs. The rear ends of the bristles 2 splash the sucked water flows onto the back-flushing plate, forming a powerful flush flow to flush away oral waste in the furs. This unique cleaning approach of "suction, flushing, and brushing" "three-in-one" would be the more ideal method for cleaning the tongue, which not only deeply and thoroughly cleans the furs and fermented objects but also avoids injury to the taste buds and lingual papillae and stimulates and revives the sense of taste while attaining health-care massage on the reflective zones of the tongue.

### Second Embodiment: Gum Massage

A pair of brush heads 1 made of a food-grade silica gel type of soft material is driven by a pair of transmission rods 5 to perform 360-degree rotation in opposite directions. Proper gum massage can be attained while brushing the teeth. A pair of bristles 2 is driven by a pair of transmission rods 5 to roll. The bristles 2 adjacent to an end of the gum always rotate and massage in the direction from the gum towards the crown of the tooth, no matter it is the outer gum or the inner gum and no matter it is the upper gum or the lower gum. No matter the brush heads are moved horizontally or vertically, proper gum message can be attained without contusion, sprain, eversion, or gingival laceration of the gums. Gum massage can improve blood circulation in the gums and the roots of teeth, increase the toughness and elasticity of the gums, and prevent gum breeding, gum shrinkage, periodontal disease, and gomphiasis. Furthermore, repair of tooth nerves can be effectively improved to help recovery of sensitive dentin.

### Third Embodiment: Lip Care

A pair of brush heads 1 made of a food-grade silica gel type of soft material is driven by a pair of transmission rods 5 to perform 360-degree rotation in opposite directions. During cleaning of the lips, the bristles can thoroughly clean the residues in the oral cavity through "rolling brushing" while "holding up" the lip skin well to attain lip massage to thereby improve the blood circulation at the lips, which not only attains cleaning of the lips but prevents dry, cracked lips and slack lip muscles, achieving an effect of restoring youth and health.

## Claims

1. A brush head device of a multifunctional oral care tool, **characterized in that** the brush head device comprises: a pair of brush heads respectively performs 360-degree rotation in opposite directions, with the brush heads respectively connected with a pair of transmission rods, with a back-flushing plate provided at a back of the brush heads that respectively perform the 360-degree rotation in the opposite directions, with a top end of the back-flushing plate being lower than top ends of the brush heads.

2. The brush head device of the multifunctional oral care tool as claimed in claim 1, **characterized in that** the brush heads are brush heads made of a food-grade silica gel type of soft material.

3. The brush head device of the multifunctional oral care tool as claimed in claim 1, **characterized in that** the brush heads are integrally formed brush heads.

4. The brush head device of the multifunctional oral care tool as claimed in claim 1, **characterized in that** end portions of the transmission rods are lower than end portions of the brush heads.
